Europäisches Patentamt

(19) European Patent Office

Office européen des brevets

(11) Publication number: · **0 017 339**
**B1**

(12) **EUROPEAN PATENT SPECIFICATION**

(45) Date of publication of patent specification: **24.11.82**

(21) Application number: **80300621.2**

(22) Date of filing: **29.02.80**

(51) Int. Cl.³: **A 01 N 57/16** //(A01N57/16, 57/14)

(54) Insecticidal synergistic composition containing O,O-diethyl O-(3,5,6-trichloro-2-pyridinyl)phosphorothioate and O-ethyl O-(2-chloro-4-bromophenyl)-S-n-propyl phosphorothioate and method of controlling insects therewith.

(30) Priority: **23.03.79 US 23515**

(43) Date of publication of application:
**15.10.80 Bulletin 80/21**

(45) Publication of the grant of the patent:
**24.11.82 Bulletin 82/47**

(84) Designated Contracting States:
**DE FR IT**

(56) References cited:
**DE - A - 2 249 462**
**FR - A - 2 237 580**

(73) Proprietor: **THE DOW CHEMICAL COMPANY Dow Center 2030 Abbott Road Post Office Box 1967**
**Midland Michigan 48640 (US)**

(72) Inventor: **Larson, Larry LeVerne**
**5555 Michigan Boulevard**
**Concord California (US)**

(74) Representative: **Hardisty, David Robert et al, BOULT, WADE & TENNANT 27 Furnival Street London EC4A IPQ (GB)**

Courier Press, Leamington Spa, England.

# 0 017 339

Insecticidal synergistic composition containing O,O-diethyl O-(3,5,6-trichloro-2-pyridinyl)phosphorothioate and O-ethyl O-(2-chloro-4-bromophenyl)-S-*n*-propyl phosphorothioate and method of controlling insects therewith

This invention provides new insecticidal compositions which are useful in the kill and control of insects. The new compositions comprise a mixture of O,O-diethyl O-(3,5,6-trichloro-2-pyridinyl)-phosphorothioate and O-ethyl O-(2-chloro-4-bromophenyl)-S-*n*-propyl phosphorothioate as mutually activating toxic ingredients.

The new insecticidal composition of the present invention comprises 1 part by weight of O,O-diethyl O-(3,5,6-trichloro-2-pyridinyl)phosphorothioate and from 1/66 to 8 parts by weight of O-ethyl O-(2-chloro-4-bromophenyl)-S-*n*-propyl phosphorothioate, i.e. a ratio of 66:1 to 1:8. A preferred ratio is from 4:1 to 1:4 with the most preferred ratio being from 2:1 to 1:2.

German Patent Specification No. DE—A—2 249 462 discloses O-ethyl O-(2-chloro-4-bromophenyl)-S-*n*-propyl phosphorothioate and its insecticidal or acaracidal action. It also teaches that the range of insecticidal or acaracidal activity of this compound may be extended by adding to it other insecticides and/or acaricides. One of many such possible additives listed in the specification is O,O-diethyl O-(3,5,6-trichloro-2-pyridyl)thiophosphate. This disclosure teaches that the above two compounds may be used in admixture but discloses nothing of the properties of the admixture. We have found that the mixture of compounds which form this invention have an unexpected synergistic effect which could not have been predicted from the prior art.

The insecticidal composition of the present invention is especially effective in the kill and control of a broad spectrum of insects. The compositions are particularly effective against insects which infest crops such as corn, tobacco and soybeans, with particular valuable results against insects which attack cotton. The compositions are effective as contact and stomach poisons and can therefore be employed for the control of stages of development of the insects such as eggs, larvae, nymphs, pupae and adults. The composition can be applied to a variety of insects of the biting, boring and sucking types.

The compositions of the invention are especially valuable for kill and control of the cotton bollworm, tobacco budworm, codling moth, and the beet armyworm.

The present invention also comprises methods for controlling insects by contacting such organisms and/or their habitats with a pesticidally effective amount of the active compound mixture. For such uses the unmodified active materials of the present invention can be employed. However, the present invention embraces the use of an insecticidally-effective amount of the active materials in admixture with an inert material as an adjuvant or carrier therefor, in solid or liquid form. Thus, for example, the active mixture can be dispersed on a finely divided solid and employed therein as a dust. Also, the active mixture, as liquid concentrates or solid compositions comprising the active mixture, can be dispersed in water, typically with the aid of a wetting agent, and the resulting aqueous dispersion employed as a spray. In other procedures, the active mixture can be employed as a constituent of organic liquid compositions, oil-in-water and water-in-oil emulsions, or water dispersions, with or without the addition of wetting, dispersing, or emulsifying agents.

The active mixtures can also be applied as aerosols, e.g., by dispersing them in air by means of a compressed gas such as dichlorodifluoromethane or trichlorofluoromethane and other such materials.

The active mixture of the present invention can also be applied with adjuvants or carriers such as talc, pyrophyllite, synthetic fine silica, attapulgus clay, kieselguhr, chalk, diatomaceous earth, lime, calcium carbonate, bentonite, fuller's earth, cottonseed hulls, wheat flour, soybean flour, pumice, tripoli, wood flour, walnut shell flour, redwood flour and lignin.

It is frequently desirable to incorporate a surface active agent in the compositions of the present invention. Such surface active or wetting agents are advantageously employed in both the solid and liquid compositions. The surface active agent can be anionic, cationic or nonionic in character.

Typical classes of surface active agents include alkyl sulfonate salts, alkylaryl sulfonate salts, alkylaryl polyether alcohols, fatty acid esters of polyhydric alcohols and the alkylene oxide addition products of such esters, and addition products of long chain mercaptans and alkylene oxides.

The concentration of the active mixtures in liquid or dry formulations generally is from 0.01 to 95 percent by weight or more. Concentrations of from 0.1 to 50 weight percent are often employed. In formulations to be employed as concentrates, the active materials can be present in a concentration of from 5 to 98 weight percent. In a preferred embodiment the composition includes an inert liquid carrier and the mixture of toxicants is present in an amount of from 5.0 to 95 percent by weight of the total composition. In another preferred embodiment the composition is an aqueous dispersion and the mixture of toxicants is present in an amount of from 0.01 to 50 percent by weight of the total composition.

The active compositions can also contain other compatible additaments, for example, plant growth regulants or pesticides.

The present compositions can be applied by the use of power-dusters, boom and hand sprayers, spray-dusters and by other conventional means. The compositions can also be applied from airplanes as a dust or a spray.

**0 017 339**

The active mixtures of this invention are usually applied at an approximate rate of from 1/16 pound to 5 pounds or more per acre (0.07 to 5.6 kgs/hectare), but lower or higher rates may be appropriate in some cases. A preferred application rate is from 1/4 pound to 2 pounds per acre (0.28 to 2.24 kgs/hectare).

The following examples further illustrate the present invention. In the tables of the examples the units in which the amounts of chemical is used are measured are parts per million.

Example I

A study was conducted to determine the effectiveness and synergistic response of various combinations of O,O-diethyl O-(3,5,6-trichloro-2-pyridinyl)phosphorothioate and O-ethyl O-(2-chloro-4-bromophenyl)-S-*n*-propyl phosphorothioate in the control of Tobacco budworms.

Test solutions were prepared by admixing predetermined amounts of each of the above compounds in predetermined amounts of water containing predetermined amounts of acetone and a nonionic alkylaryl polyether alcohol surfactant.

Tobacco leaf discs, 3 inches (7.62 cms) in diameter were dipped into one of the above mixtures and placed in an open petri dish to dry. After the leaf discs were dry, 5 late second instar (approximately 3-day old) tobacco bud worms *(Heliothis virescens)* were placed in each dish and the dishes covered. All treatments were run in triplicate and on two different days. Mortality was recorded 48 hours after treatment with moribund larvae unable to crawl their own body length being counted as dead. In this test method, intoxication occurred through contact with and feeding upon treated plants.

The results of this study are set forth below in Table I.

3

TABLE I

| Test no.[1] | Chemical[2] | Amount | Chemical[3] | Amount | Ratio of A to B | Expected control[4] | Actual control | Percent increase over expected control[5] |
|---|---|---|---|---|---|---|---|---|
| 1 | — | — | — | — | — | — | 0 | — |
| 2 | A | 12.5 | — | — | — | — | 0 | — |
| 3 | A | 25 | — | — | — | — | 23 | — |
| 4 | A | 50 | — | — | — | — | 48 | — |
| 5 | A | 100 | — | — | — | — | 70 | — |
| 6 | — | — | B | 1.5 | — | — | 0 | — |
| 7 | — | — | B | 3.1 | — | — | 7 | — |
| 8 | — | — | B | 6.2 | — | — | 7 | — |
| 9 | — | — | B | 12.5 | — | — | 40 | — |
| 10 | — | — | B | 25 | — | — | 67 | — |
| 11 | — | — | B | 50 | — | — | 86 | — |
| 12 | A | 12.5 | B | 1.5 | 8:1 | 0 | 0 | 0 |
| 13 | A | 25 | B | 1.5 | 16:1 | 23 | 30 | 30 |
| 14 | A | 50 | B | 1.5 | 32:1 | 48 | 60 | 25 |
| 15 | A | 100 | B | 1.5 | 66:1 | 70 | 80 | 14 |
| 16 | A | 12.5 | B | 3.1 | 4:1 | 7 | 13 | 85 |
| 17 | A | 25 | B | 3.1 | 8:1 | 28 | 67 | 139 |
| 18 | A | 50 | B | 3.1 | 16:1 | 52 | 93 | 79 |
| 19 | A | 100 | B | 3.1 | 32:1 | 72 | 87 | 21 |
| 20 | A | 12.5 | B | 6.2 | 2:1 | 7 | 33 | 371 |
| 21 | A | 25 | B | 6.2 | 4:1 | 28 | 60 | 114 |
| 22 | A | 100 | B | 6.2 | 16:1 | 72 | 100 | 39 |
| 23 | A | 12.5 | B | 12.5 | 1:1 | 40 | 53 | 33 |
| 24 | A | 25 | B | 12.5 | 2:1 | 54 | 93 | 72 |
| 25 | A | 50 | B | 12.5 | 4:1 | 69 | 93 | 35 |
| 26 | A | 100 | B | 12.5 | 8:1 | 82 | 100 | 22 |
| 27 | A | 12.5 | B | 25 | 1:2 | 67 | 90 | 34 |
| 28 | A | 25 | B | 25 | 1:1 | 75 | 100 | 33 |
| 29 | A | 50 | B | 25 | 2:1 | 83 | 100 | 20 |
| 30 | A | 100 | B | 25 | 4:1 | 90 | 100 | 11 |
| 31 | A | 12.5 | B | 50 | 1:4 | 86 | 100 | 16 |
| 32 | A | 25 | B | 50 | 1:2 | 89 | 100 | 12 |
| 33 | A | 50 | B | 50 | 1:1 | 93 | 100 | 8 |
| 34 | A | 100 | B | 50 | 2:1 | 96 | 100 | 4 |

[1] Test Nos. 1—11 are control runs with Test 1 being a no chemical control (surfactant/acetone/water alone).

[2] Chemical A represents O,O-diethyl O-(3,5,6-trichloro-2-pyridinyl)phosphorothioate.

[3] Chemical B represents O-ethyl O-(2-chloro-4-bromophenyl)-S-n-propyl phosphorothioate.

[4] Expected control equals % control by chemical A+% control by chemical B minus (−).

$$\frac{\% \text{ control by chemical A} \times \% \text{ control chemical B}}{100}$$

[5] Percent increase over expected control equals

$$\frac{\text{actual control}}{\text{expected control}} \times 100 - 100$$

Example II

A study was conducted to determine the effectiveness and synergistic response of various combinations of O,O-diethyl O-(3,5,6-trichloro-2-pyridinyl)phosphorothioate and O-ethyl O-(2-chloro-4-bromophenyl)-S-n-propyl phosphorothioate in the control of beet armyworm.

Test solutions were prepared by admixing predetermined amounts of each of the above compounds as set forth above in Example I.

Stands of young cotton plants were thoroughly wetted briefly with one of the above set forth compositions and the wetted plants permitted to dry. After the plants were dry, the leaves were cut off and placed in a petri dish. Five (5) live beet armyworm larvae *(Spodoptera exigua)* were placed in each dish. In identical operations, 5 live beet armyworm larvae were placed in each dish of control petri dishes containing untreated (surfactant/acetone/water only) cotton leaves. The dishes were maintained for a period of about 2 days under conditions favorable to the growth of the larvae. At the end of the 2-day period, all of the dishes were examined to determine the percent kill and control of the larvae. The results of this examination are set forth below in Table II.

TABLE II

| Test no.[1] | Chemical[2] | Amount | Chemical[3] | Amount | Ratio of A to B | Expected control[4] | Actual control | Percent increase over expected control[5] |
|---|---|---|---|---|---|---|---|---|
| 1 | — | — | — | — | — | — | 0 | — |
| 2 | A | 3.1 | — | — | — | — | 0 | — |
| 3 | A | 6.2 | — | — | — | — | 20 | — |
| 4 | A | 12.5 | — | — | — | — | 60 | — |
| 5 | — | — | B | 1.5 | — | — | 0 | — |
| 6 | — | — | B | 3.1 | — | — | 0 | — |
| 7 | — | — | B | 6.2 | — | — | 0 | — |
| 8 | — | — | B | 12.5 | — | — | 7 | — |
| 9 | — | — | B | 25 | — | — | 73 | — |
| 10 | A | 3.1 | B | 1.5 | 2:1 | 0 | 7 | >100[6] |
| 11 | A | 6.2 | B | 1.5 | 4:1 | 20 | 7 | 0 |
| 12 | A | 12.5 | B | 1.5 | 8:1 | 60 | 100 | 66 |
| 13 | A | 3.1 | B | 3.1 | 1:1 | 0 | 7 | >100[6] |
| 14 | A | 6.2 | B | 3.1 | 2:1 | 20 | 27 | 35 |
| 15 | A | 12.5 | B | 3.1 | 4:1 | 60 | 93 | 55 |
| 16 | A | 3.1 | B | 6.2 | 1:2 | 0 | 20 | >100[6] |
| 17 | A | 6.2 | B | 6.2 | 1:1 | 20 | 60 | 200 |
| 18 | A | 12.5 | B | 6.2 | 2:1 | 60 | 87 | 45 |
| 19 | A | 3.1 | B | 12.5 | 1:4 | 7 | 47 | 571 |
| 20 | A | 6.2 | B | 12.5 | 1:2 | 26 | 27 | 4 |
| 21 | A | 12.5 | B | 12.5 | 1:1 | 61 | 87 | 43 |
| 22 | A | 3.1 | B | 25 | 1:8 | 25 | 80 | 220 |
| 23 | A | 6.2 | B | 25 | 1:4 | 40 | 93 | 133 |
| 24 | A | 12.5 | B | 25 | 1:2 | 70 | 100 | 43 |

[1] Test Nos. 1—9 are control runs with Test 1 being a no chemical control (surfactant/acetone/water alone).

[2] Chemical A represents O,O-diethyl O-(3,5,6-trichloro-2-pyridinyl)phosphorothioate.

[3] Chemical B represents O-ethyl O-(2-chloro-4-bromophenyl)-S-*n*-propyl phosphorothioate.

[4] Expected control equals % control by chemical A+% control by chemical B minus (—)

$$\frac{\% \text{ control by chemical A} \times \% \text{ control chemical B}}{100}$$

[5] Percent increase over expected control equals

$$\frac{\text{actual control}}{\text{expected control}} \times 100 - 100$$

[6] Percent increase too great to be computed.

Example III

A study was conducted to determine the effectiveness and synergistic response of various combinations of O,O-diethyl O-(3,5,6-trichloro-2-pyridinyl)phosphorothioate and O-ethyl O-(2-chloro-4-bromophenyl)-S-*n*-propyl phosphorothioate in the control of codling moths *(Laspeyresia pomonella)*.

Test solutions were prepared by admixing predetermined amounts of each of the above compounds as set forth in Example I.

Sheets containing egg masses of codling moths are pinned to apples and the egg sheets and apples are drenched with an aqueous dispersion of one of the hereinafter set forth compounds. Separate egg masses on apples were also treated with the control mixture. The egg masses/apples were incubated under conditions conducive to the hatching of the eggs and the growth of the larvae therefrom. At the same time, a water/acetone/surfactant mixture containing none of the compound mixtures was also prepared to serve as a control. Eight days after treatment, the apples were examined for the presence of larvae. Counts of the number of larvae penetration in the treated fruit was compared to the number present in the control to determine the present control obtained with the test compounds. The results of the examination are set forth below in Table III.

TABLE III

| Test no.[1] | Chemical[2] | Amount | Chemical[3] | Amount | Ratio of A to B | Expected control[4] | Actual control | Percent increase over expected control[5] |
|---|---|---|---|---|---|---|---|---|
| 1 | — | — | — | — | — | — | 0 | — |
| 2 | A | 3.1 | — | — | — | — | 0 | — |
| 3 | A | 6.2 | — | — | — | — | 50 | — |
| 4 | A | 12.5 | — | — | — | — | 67 | — |
| 5 | A | 25 | — | — | — | — | 79 | — |
| 6 | — | — | B | 1.5 | — | — | 0 | — |
| 7 | — | — | B | 3.1 | — | — | 0 | — |
| 8 | — | — | B | 6.2 | — | — | 0 | — |
| 9 | — | — | B | 12.5 | — | — | 36 | — |
| 10 | — | — | B | 25 | — | — | 43 | — |
| 11 | A | 3.1 | B | 1.5 | 2:1 | 0 | 37 | >100[6] |
| 12 | A | 6.2 | B | 1.5 | 4:1 | 50 | 55 | 10 |
| 13 | A | 12.5 | B | 1.5 | 8:1 | 67 | 60 | 0 |
| 14 | A | 25 | B | 1.5 | 16:1 | 79 | 87 | 10 |
| 15 | A | 3.1 | B | 3.1 | 1:1 | 0 | 38 | >100[6] |
| 16 | A | 6.2 | B | 3.1 | 2:1 | 50 | 54 | 8 |
| 17 | A | 12.5 | B | 3.1 | 4:1 | 67 | 74 | 10 |
| 18 | A | 25 | B | 3.1 | 8:1 | 79 | 87 | 10 |
| 19 | A | 3.1 | B | 6.2 | 1:2 | 0 | 61 | >100[6] |
| 20 | A | 6.2 | B | 6.2 | 1:1 | 50 | 70 | 40 |
| 21 | A | 12.5 | B | 6.2 | 2:1 | 67 | 71 | 6 |
| 22 | A | 25 | B | 6.2 | 4:1 | 79 | 84 | 6 |
| 23 | A | 3.1 | B | 12.5 | 1:4 | 36 | 66 | 83 |
| 24 | A | 6.2 | B | 12.5 | 1:2 | 68 | 69 | 1 |
| 25 | A | 12.5 | B | 12.5 | 1:1 | 79 | 84 | 6 |
| 26 | A | 25 | B | 12.5 | 2:1 | 87 | 99 | 14 |
| 27 | A | 3.1 | B | 25 | 1:8 | 43 | 64 | 49 |
| 28 | A | 6.2 | B | 25 | 1:4 | 72 | 85 | 18 |
| 29 | A | 12.5 | B | 25 | 1:2 | 81 | 89 | 10 |
| 30 | A | 25 | B | 25 | 1:1 | 88 | 97 | 10 |

[1] Test Nos. 1—10 are control runs with Test 1 being a no chemical control (surfactant/acetone/water alone).

[2] Chemical A represents O,O-diethyl O-(3,5,6-trichloro-2-pyridinyl)phosphorothioate.

[3] Chemical B represents O-ethyl O-(2-chloro-4-bromophenyl)-S-$n$-propyl phosphorothioate.

[4] Expected control equals % control by chemical A+% control by chemical B minus (—)

$$\frac{\% \text{ control by chemical A} \times \% \text{ control chemical B}}{100}$$

[5] Percent increase over expected control equals

$$\frac{\text{actual control}}{\text{expected control}} \times 100 - 100$$

[6] Percent increase too great to be computed.

Data from Tables I, II and III illustrates that better control was obtained employing the two toxicants together than would be expected from the results obtained from employing each of the two toxicants alone. These data are obtained according to the technique described in Colby, "Calculating Synergistic and Antagonistic Responses of Herbicide Combinations", Weeds, Vol. 15 (1967) pages 20—22 and Colby, "Greenhouse Evaluation of Herbicide Combinations", Proc. NEWCC, No. 19, pages 312—320.

**Claims**

1. A synergistic insecticidal composition characterized by containing a mixture of toxicants comprising 1 part by weight of O,O-diethyl O-(3,5,6-trichloro-2-pyridinyl)phosphorothioate and from 1/66 to 8 parts by weight of O-ethyl O-(2-chloro-4-bromophenyl)-S-*n*-propyl phosphorothioate.

2. A composition as claimed in Claim 1 characterized in that it further contains an inert carrier.

3. A composition as claimed in Claim 2 characterized in that the carrier is an inert liquid carrier.

4. A composition as claimed in Claim 3 characterized in that the mixture of toxicants is present in an amount of from 5.0 to 95 percent by weight of the total composition.

5. A composition as claimed in Claim 3 characterized in that the composition is present as an aqueous dispersion and the mixture of toxicants is present in an amount of from 0.01 to 50 percent by weight of the total composition.

6. A method for controlling insects characterized by contacting the insects or their habitat with a composition which comprises a mixture of toxicants comprising 1 part by weight of O,O-diethyl O-(3,5,6-trichloro-2-pyridinyl)phosphorothioate and from 1/66 to 8 parts by weight of O-ethyl O-(2-chloro-4-bromophenyl)-S-*n*-propyl phosphorothioate.

7. A method as claimed in Claim 6 characterized in that the composition further comprises an inert carrier.

8. A method as claimed in Claim 6 characterized in that the composition is employed in amounts of from 1/16 pound to 5 pounds per acre (0.07 to 5.6 kgs/hectare).

**Revendications**

1. Composition insecticide synergique, caractérisée par le fait qu'elle contient un mélange de produits toxiques comprenant 1 partie en poids de O,O-diéthyle O-(3,5,6-trichloro-2-pyridinyl)-phosphorothioate et de 1/66 à 8 parties en poids de O-éthyle O-(2-chloro-4-bromophényl)-S-*n*-propyl-phosphorothioate.

2. Composition selon la revendication 1, caractérisée par le fait qu'elle contient en outre un véhicule inerte.

3. Composition selon la revendication 2, caractérisée par le fait que le véhicule est un véhicule liquide inerte.

4. Composition selon la revendication 3, caractérisée par le fait que le mélange de produits toxiques est présent en une quantité de 5,0 à 95% en poids de la composition totale.

5. Composition selon la revendication 3, caractérisée par le fait que la composition est présente sous forme d'une dispersion aqueuse et que le mélange de produits toxiques est présent en une quantité de 0,01 à 50% en poids de la composition totale.

6. Méthode pour combattre les insectes, caractérisée par la mise en contact des insectes, ou de leur habitat, avec une composition qui comprend un mélange de produits toxiques constitué par 1 partie en poids de O,O-diéthyle O-(3,5,6-trichloro-2-pyridinyl)-phosphorothioate et de 1/66 à 8 parties en poids de O-éthyle O-(2-chloro-4-bromophényl)-S-*n*-propylphosphorothioate.

7. Méthode selon la revendication 6, caractérisée par le fait que la composition contient en outre un véhicule inerte.

8. Méthode selon la revendication 6, caractérisée par le fait que la composition est utilisée en des quantités allant de 0,07 à 5,6 kg/(hectare) (1/16 à 5 pounds par acre).

**Patentansprüche**

1. Synergistisch wirkende Insektizidzusammensetzung, dadurch gekennzeichnet, daß sie eine Mischung aus Giftstoffen enthält, die 1 Gew.-Teil O,O-Diäthyl-O-(3,5,6-trichlor-2-pyridinyl)-thiophosphorsäureester und von 1/66 bis 8 Gew.-Teile O-Äthyl-O-(2-chlor-4-bromphenyl)-S-*n*-propyl-thiophosphorsäureester umfaßt.

2. Zusammensetzung nach Anspruch 1, dadurch gekennzeichnet, daß sie außerdem einen inerten Träger enthält.

3. Zusammensetzung nach Anspruch 2, dadurch gekennzeichnet, daß der Träger ein inerter, flüssiger Träger ist.

4. Zusammensetzung nach Anspruch 3, dadurch gekennzeichnet, daß die Mischung der Giftstoffe in einer Menge von 5,0 bis 95 Gew.-% der gesamten Zusammensetzung vorliegt.

5. Zusammensetzung nach Anspruch 3, dadurch gekennzeichnet, daß die Zusammensetzung als wäßrige Dispersion vorliegt und daß die Mischung der Giftstoffe in einer Menge von 0,01 bis 50 Gew.-% der gesamten Zusammensetzung vorliegt.

6. Verfahren zum Kontrollieren von Insekten, dadurch gekennzeichnet, daß man die Insekten oder ihr Verbreitungsgebiet mit einer Zusammensetzung in Kontakt bringt, die eine Mischung von Giftstoffen enthält, die aus 1 Gew.-Teil von O,O-Diäthyl-O-(3,5,6-trichlor-2-pyridinyl)thiophosphorsäureester und von 1/66 bis 8 Gew.-Teilen O-Äthyl-O-(2-chlor-4-bromphenyl)-S-*n*-propyl-thiophosphorsäureester besteht.

7. Verfahren nach Anspruch 6, dadurch gekennzeichnet, daß die Zusammensetzung außerdem einen inerten Träger enthält.

8. Verfahren nach Anspruch 6, dadurch gekennzeichnet, daß die Zusammensetzung angewendet wird in Mengen von 0,07 bis 5,6 kg/ha (1/16 pound bis 5 pounts pro acre).